**Europäisches Patentamt**

**European Patent Office**

**Office européen des brevets**

(19)

(11) Numéro de publication: **0 288 363**
**A1**

(12)

# DEMANDE DE BREVET EUROPEEN

(21) Numéro de dépôt: **88400912.7**

(22) Date de dépôt: **15.04.88**

(51) Int. Cl.⁴: **B 01 J 29/06**
**C 10 G 11/05**

(30) Priorité: **24.04.87 FR 8705898**

(43) Date de publication de la demande:
**26.10.88 Bulletin 88/43**

(84) Etats contractants désignés: **AT DE GB NL**

(71) Demandeur: **INSTITUT FRANCAIS DU PETROLE**
**4, Avenue de Bois-Préau**
**F-92502 Rueil-Malmaison (FR)**

(72) Inventeur: **Marcilly, Christian**
**91 ter rue Condorcet**
**F-78800 Houilles (FR)**

**Raatz, Francis**
**17, rue Michelet**
**F-92500 Rueil Malmaison (FR)**

**Deves, Jean-Marie**
**75, rue des Bons Raisins**
**F-92500 Rueil Malmaison (FR)**

(54) **Catalyseur de craquage de charges hydrocarbonées comprenant une mordénite désaluminée, une zéolithe y et une matrice.**

(57) Catalyseur renfermant :

a) de 20 à 95 % en poids d'au moins une matrice,

b) de 1 à 60 % en poids d'au moins une zéolithe Y de structure, faujasite,

c) de 0,01 à 30 % en poids d'au moins une mordénite désaluminée ayant un rapport atomique Si/Al supérieur à 15, une teneur en sodium inférieure à environ 0,2 % en poids, un volume de maille V, de la maille élémentaire, inférieur à environ 2,760 nm³ et une capacité d'adsorption d'azote mesurée à 77 K supérieure à 0,09 cm³ (liquide)xg⁻¹ sous une pression partielle P/Ps de 0,19.

Le catalyseur trouve son application dans les procédés de craquage catalytique de charges hydrocarbonées en vue d'obtenir un produit renfermant une proportion élevée de propylène et d'isobutane.

EP 0 288 363 A1

**Description**

## CATALYSEUR DE CRAQUAGE DE CHARGES HYDROCARBONEES COMPRENANT UNE MORDENITE DESALUMINEE, UNE ZEOLITHE Y ET UNE MATRICE

La présente invention concerne un catalyseur de conversion de charges hydrocarbonées comprenant une zéolithe Y de structure faujasite associée à une mordénite désaluminée et à une matrice habituellement amorphe ou mal cristallisée.

Le catalyseur de la présente invention est particulièrement bien adapté au craquage de fraction pétrolière en vue de produire une quantité importante de composés ayant 3 et/ou 4 atomes de carbone dans leur molécule et plus particulièrement du propylène et de l'isobutane. Le catalyseur de la présente invention est particulièrement bien adapté au craquage de fractions pétrolières lourdes.

La présente invention concerne également le procédé de craquage de charges pétrolières lourdes, en présence du catalyseur défini ci-avant, ainsi que les procédés de préparation dudit catalyseur. Le craquage des charges hydrocarbonées, permettant d'obtenir des rendements élevés en essence pour automobile de très bonne qualité s'est imposé dans l'industrie pétrolière dès la fin des années 1930. L'introduction des procédés fonctionnant en lit fluide (FCC ou Fluid Catalytic Cracking) ou en lit mobile (tel le TCC) dans lesquels le catalyseur circule en permanence entre la zone réactionnelle et le régénérateur où il est débarassé du coke par combustion en présence d'un gaz contenant de l'oxygène a introduit un progrès important par rapport à la technique du lit fixe. Les unités à lit fluide (FCC) sont maintenant beaucoup plus répandues que celles à lit mobile. Le craquage est habituellement réalisé vers 500°C, sous une pression totale voisine de la pression atmosphérique et en l'absence d'hydrogène.

Les catalyseurs les plus utilisés dans les unités de craquage sont depuis le début des années 1960 des zéolithes habituellement de structure faujasite. Ces zéolithes, incorporées dans une matrice amorphe, par exemple constituée de silice-alumine amorphe, et pouvant contenir des proportions variables d'argiles, sont caractérisées par des activités craquantes vis à vis des hydrocarbures 1000 à 10000 fois supérieures à celles des catalyseurs silice-alumines riches en silice utilisés jusque vers la fin des années 1950.

- vers la fin des années 1970 le manque de disponibilité en pétrole brut, et la demande croissante en essence à haut indice d'octane ont conduit le raffineur à traiter des bruts de plus en plus lourds. Le traitement de ces dernières constitue un problème difficile pour le raffineur en raison de leurs teneurs élevées en poisons des catalyseurs, notamment en composés azotés et en composés métalliques (en particulier nickel et vanadium), des valeurs inhabituelles en Carbone Conradson et surtout en composés asphalténiques.

Cette nécessité de traiter des charges lourdes et d'autres problèmes plus récents, tels que : la suppression progressive mais générale dans l'essence des additifs à base de plomb, l'évolution lente mais sensible dans divers pays de la demande en distillats moyens (kérosène et gazoles), ont de plus incité les raffineurs à rechercher des catalyseurs améliorés permettant d'atteindre les objectifs suivants :

- catalyseurs plus stables thermiquement et hydrothermiquement et plus tolérants aux métaux,
- produire moins de coke conversion identique,
- obtenir une essence d'indice d'octane plus élevé,
- sélectivité améliorée en distillats moyens.

Dans la majorité des cas, on cherche à minimiser la production de gaz légers, comprenant des composés ayant de 1 à 4 atomes de carbone dans leur molécule, et par conséquent les catalyseurs sont conçus pour limiter la production de tels gaz légers.

Cependant il apparait dans certains cas particuliers, une importante demande en hydrocarbures légers ayant de 2 à 4 atomes de carbone dans leur molécule ou en certains d'entre eux, tels que les hydrocarbures en $C_3$ et/ou $C_4$ et plus particulièrement le propylène et l'isobutane. L'obtention d'une quantité importante d'isobutane est en particulier intéressante dans le cas où le raffineur dispose d'une unité d'alkylation dans laquelle ce composé est employé comme agent d'alkylation, par exemple des coupes $C_3$-$C_4$ contenant des oléfines, en vue de former une quantité supplémentaire d'essence à haut indice d'octane.

Ainsi le rendement global, en essence de bonne qualité, obtenu à partir de la coupe d'hydrocarbures de départ est sensiblement augmenté.

L'obtention de propylène est particulièrement souhaitée dans certains pays en voie de développement, où apparait une demande importante en ce produit.

Le procédé de craquage catalytique peut satisfaire dans une certaine mesure de telles demandes à condition en particulier d'adapter le catalyseur en vue de cette production. Une manière efficace d'adapter le catalyseur consiste à ajouter aux masses catalytiques classiques un agent actif présentant les deux qualités suivantes :

1) Craquer les molécules lourdes avec une bonne sélectivité en hydrocarbures à 3 et/ou 4 atomes de carbone, notamment en propylène et en isobutane.

Etre suffisamment résistant aux conditions sévères de pression partielle de vapeur d'eau et de température qui règnent dans le régénérateur d'un craqueur industriel.

Les importants travaux de recherche effectués par le demandeur sur de nombreuses zéolithes, l'on conduit à découvrir, que de façon surprenante, une mordénite désaluminée permet d'obtenir un catalyseur ayant une excellente stabilité et possédant une bonne sélectivité vis à vis d'une production d'hydrocarbures à trois et quatre atomes de carbone. L'utilisation d'une mordénite désaluminée de rapport atomique Si/Al supérieur à

permet d'obtenir un catalyseur de craquage permettant d'obtenir une proportion de gaz, et notamment de propylène et d'isobutane, plus importante qu'avec les catalyseurs de l'art antérieur, sans augmenter de manière sensible la production de coke. Ainsi les catalyseurs de la présente invention permettent d'obtenir de bien meilleurs résultats que les catalyseurs de l'art antérieur contenant une mordénite de rapport atomique silicium sur aluminium généralement inférieur à 11, associée à une zéolithe Y, stabilisée ou non, tels que par exemple ceux décrits dans les documents EP-A-20 154 et US-A-4 152.

Il existe 2 types de mordénite, qui se distinguent par leurs propriétés d'adsorption : la forme à larges pores, toujours synthétique, qui adsorbe les molécules telles que le benzène (diamètre cinétique = $6,6 \times 10^{-10}$ m) et la forme à petits pores, naturelle ou synthétique, qui n'adsorbe que des molécules de diamètre cinétique inférieur à $4,4 \times 10^{-10}$ m environ. Ces mordénites se distinguent également par des différences morphologiques - aiguilles pour la mordénite petits pores, sphérulites pour la mordénite larges pores - et structurales : présence ou non de défauts.

La mordénite est caractérisée par un rapport atomique Si/Al compris habituellement entre 4,5 et 11 ; sa structure cristalline est constituée d'enchaînements de tétraèdres de base $SiO_4$ et $AlO_4$, générateurs de deux types de canaux : des canaux à ouverture dodécagonale (contour à 12 oxygènes) et des canaux à ouverture octogonale (contour à 8 oxygènes).

Les mordénites tétraéthylammonium (TEA) synthétisées en présence d'ions organiques tétraéthylammonium appartiennent à la catégorie larges pores. Leurs propriétés d'adsorption, telles que décrites ci-avant, ne peuvent évidemment être déterminées qu'après élimination, par exemple par calcination, des ions tétraéthylammonium. Leurs rapports atomiques Si/Al sont le plus souvent compris entre 7 et 11.

Il est possible de "déboucher" les canaux des mordénites à petits pores, par exemple par traitement dans un acide minéral fort et/ou par calcination en présence de vapeur d'eau, et d'accéder à une capacité d'adsorption voisine de celle de la mordénite larges pores.

Les différentes caractéristiques des zéolithes sont mesurées par les méthodes ci-après :
- les rapports atomiques Si/Al globaux sont déterminés par analyse fluorescence X, les teneurs en sodium par absorption atomique,
- le volume de la maille et la cristallinité sont déterminés par diffraction X, l'échantillon étant préparé de manière analogue au mode opératoire de la norme ASTM D3942 80 établie pour la faujasite,
- la capacité d'adsorption en azote de la mordénite est déterminée à 77 K pour une pression relative $P/Ps = 0,19$ ($P_s$ étant la pression de vapeur saturante à la température de 77 K).

La mordénite utilisée pour préparer le catalyseur de craquage selon la présente invention est une mordénite désaluminée à larges pores, sous forme de sphérulites ou sous forme aiguilles pour la mordénite à petits pores débouchés, dont le diamètre des pores est supérieur ou égal à $6,6 \times 10^{-10}$ mètres, c'est-à-dire à la valeur du diamètre cinétique du benzène.

La mordénite peut être employée sous forme hydrogène ou sous forme au moins partiellement échangée par des cations métalliques tels que par exemple des cations des métaux alcalino-terreux et/ou des métaux de terres rares de numéro atomiques 57 à 71 inclus. Les mordénites utilisées dans la présente invention peuvent être par exemple obtenues à partir des diverses mordénites synthétiques de départ suivantes : mordénite forme sodique à petits pores, mordénites forme sodiques à larges pores et mordénite forme TEA.

Les mordénites désaluminées utilisées dans la présente invention sont caractérisées par les propriétés suivantes :
- un rapport atomique Si/Al supérieur à 15, habituellement d'environ 25 à environ 1000 et de préférence d'environ 40 à environ 500,
- une teneur en sodium inférieure à environ 0,2 % poids et de préférence inférieure à environ 0,1 % par rapport au poids de mordénite sèche,
- un volume de maille V de la maille élémentaire inférieur à environ 2,760 nanomètre cube ($nm^3$), habituellement d'environ 2,650 à environ 2,760 $nm^3$ et de préférence d'environ 2,650 à environ 2,745 $nm^3$,
- une capacité d'adsorption d'azote mesurée à 77 K sous une pression relative P/Ps de 0,19 supérieure à 0,09 $cm^3$(liquide)$xg^{-1}$ et de préférence supérieure à 0,11 $cm^3$ (liquide)$xg^{-1}$.

Ces mordénites peuvent être obtenues à partir de mordénites à petits pores ayant une teneur en sodium habituellement comprise entre 4 % et 6,5 % en poids par rapport au poids de mordénite sèche, dont le rapport atomique Si/Al est habituellement d'environ 4,5 à 6,5 et le volume de maille habituellement d'environ 2,77 à 2,80 $nm^3$, par exemple par la méthode décrite par la demanderesse dans la demande de brevet européen EP-A-196965. Cette mordénite de départ n'adsorbe que des molécules de diamètre cinétique inférieur à environ $4,4 \times 10^{-10}$ m. Après traitements, la mordénite est caractérisée par différentes spécifications dont les méthodes de détermination ont été décrites ci-avant. La mordénite obtenue possède l'ensemble des caractéristiques mentionnées ci-avant, et elle possède une morphologie particulière, à savoir qu'elle se présente en majeure partie sous forme d'aiguilles de préférence de longueur moyenne 5 microns ($5 \times 10^{-6}$ m) dont les faces hexagonales ont une longueur d'environ 1 micron ($1 \times 10^{-6}$ m) et une "hauteur" d'environ 0,3 microns ($3 \times 10^{-5}$ m).

Il existe diverses méthodes d'obtention d'une mordénite désaluminée à larges pores telle que définie ci-dessus à partir d'une mordénite petits pores. Selon une méthode préférée la mordénite petits pores utilisée, est soumise aux différents traitements suivants : les cations sodium sont échangés par des cations ammonium, en plongeant la mordénite dans une solution d'un sel d'ammonium ionisable de molarité habituellement supérieure à 0,5, à une température usuellement comprise entre 20°C et 150°C. Cet échange peut être répété plusieurs fois. Le produit ainsi obtenu après ces échanges cationiques, peut être lavé puis soumis à un traitement thermique en présence de vapeur d'eau, qui peut être effectué par la technique du self steaming (calcination en atmosphère confinée). La température est habituellement comprise entre 300 et 800°C et de préférence 400 et 700°C, pendant un temps habituellement supérieur à 10 minutes et de préférence supérieure à 20 minutes. L'atmosphère de calcination contient au moins 1 % et de préférence au moins 5 % de vapeur d'eau. Dans le cas du self steaming, l'atmosphère est contituée essentiellement d'eau et d'ammoniac. Le produit ainsi obtenu peut être soumis à un traitement acide visant à extraire de l'aluminium du solide. Ce traitement peut s'effectuer en plongeant le produit dans un acide minéral ou organique fort de normalité habituellement comprise entre 0,1 et 12 N, à une température usuellement comprise entre 20 et 150°C et de préférence entre 80 et 150°C, pendant un temps habituellement supérieur de préférence à 10 minutes.

Les mordénites désaluminées utilisées dans la présente invention peuvent également être préparées à partir des mordénites sodiques à larges pores ou de la mordénite forme TEA, par exemple en utilisant les traitements décrits ci-avant dans le cas de la mordénite à petits pores.

D'autres méthodes de désalumination peuvent être envisagées telles que l'attaque par l'acide fluorhydrique, l'acide chlorhydrique en phase gazeuse, ou le traitement par un fluorosilicate ou toute autre méthode connue de l'homme du métier.

Le catalyseur de la présente invention renferme également une zéolithe Y de structure faujasite (zéolite Molecular Sieves Structure, chemistry and use, Donald W. BRECK, John WILLEY &; Sons 1973). Parmi les zéolithes Y que l'on peut utiliser, on emploiera de préférence une zéolithe Y stabilisée, couramment appelée ultrastable on USY soit sous forme au moins partiellement échangée avec des catons métalliques, par exemple des cations des métaux alcalino-terreux et/ou des cations de métaux de terres rares de numéro atomique 57 à 71 inclus, soit sous forme hydrogène.

Le catalyseur de la présente invention renferme également au moins une matrice habituellement amorphe ou mal cristallisée choisie par exemple dans le groupe formé par l'alumine, la silice, la magnésie, l'argile, l'oxyde de titane, la zircone, les combinaisons de deux au moins de ces composés et les combinaisons alumine-oxyde de bore.

A titre d'exemple de combinaisons d'au moins deux composés du groupe ci-avant, on peut citer la silice-alumine, et la silice-magnésie.

La matrice est de préférence choisie dans le groupe formé par la silice, l'alumine, la magnésie, les mélanges silice-alumine, les mélanges silice-magnésie et l'argile.

Le catalyseur de la présente invention renferme :

a) d'environ 20 à 95 % et de préférence d'environ 30 à 85 % et d'une manière souvent avantageuse d'environ 50 à 80 % en poids d'au moins une matrice,

b) d'environ 1 à 60 % et de préférence d'environ 4 à 50 % et d'une manière souvent avantageuse de 10 à 40 % en poids d'au moins une zéolithe Y, et

c) d'environ 0,01 à 30 % et de préférence d'environ 0,05 à 20 % et d'une manière souvent avantageuse d'environ 0,1 à 10 % d'au moins une mordénite ayant les caractéristiques données ci-avant.

La mordénite modifiée utilisée dans la préparation du catalyseur selon la présente invention, telle que décrite ci-avant est une mordénite dont la charpente alumino-silicatée est constituée uniquement d'atomes d'aluminium et d'atomes de silicium. Cependant on peut également employer dans la préparation du catalyseur selon la présente invention, une mordénite modifiée telle que décrite ci-avant dans laquelle une partie de l'aluminium et/ou du silicium de la charpente alumino-silicatée est remplacée, à l'issue de la synthèse, par d'autres éléments, métaux ou métalloïdes, tels que par exemple B, P, Ti, V, Cr, Fe, Mn, Ga, Ge et Zr.

Le catalyseur objet de la présente invention peut être préparé par toutes méthodes bien connues de l'Homme du métier.

Ainsi le catalyseur peut être obtenu par incorporation simultanée de la mordénite modifiée et de la zéolithe Y selon les méthodes classiques de préparation des catalyseurs de craquage contenant une zéolithe.

Le catalyseur peut être également obtenu par mélange mécanique d'un premier produit comprenant une matrice et une zéolithe Y, et d'un second produit comprenant la mordénite modifiée décrite ci-avant et qui est par exemple un mélange de ladite mordénite avec une matrice qui peut être identique ou différente de celle contenue dans ledit premier produit. Ce mélange mécanique est habituellement effectué avec des produits séchés. Le séchage des produits est de préférence effectué par atomisation (Spray-drying) par exemple à une température d'environ 100 à 500°C habituellement durant environ 0,1 à 30 secondes.

Après séchage par atomisation, ces produits peuvent encore contenir environ 1 à 30 % en poids de matière volatile (eau et ammoniac).

Le mélange mordénite modifiée-matrice contient habituellement de 1 à 90 % en poids et de préférence de 5 à 6 % en poids de mordénite par rapport au poids total dudit mélange.

Le mélange zéolithe Y-matrice employé dans la préparation du catalyseur de la présente invention est habituellement un catalyseur classique de craquage de l'art antérieur (par exemple un catalyseur du commerce) ; la mordénite modifiée décrite ci-dessus peut alors être considérée comme un additif qui peut être employé tel quel en vue de son mélange avec le catalyseur clasique de craquage défini ci-avant, ou être préalablement incorporé à une matrice, l'ensemble matrice-mordénite modifiée constituant alors l'additif que l'on mélange au catalyseur classique de craquage défini ci-avant, par exemple, après une mise en forme adéquate, par mélange mécanique des grains contenant la mordénite modifiée et des grains de catalyseur classique de craquage.

Les conditions générales de réactions de craquage catalytique sont particulièrement bien connues pour ne pas être répétées ici dans le cadre de la présente invention (voir par exemple US-A-3 293 192 ; US-A-3 449 070 ; US-A 4 415 438 ; US-A-3 518 051 et US-A-3 607 043).

L'association de mordénite modifiées selon la présente invention à un catalyseur classique de FCC permet d'obtenir un catalyseur présentant une meilleure activité et une meilleure sélectivité que le catalyseur résultant d'une association d'une mordénite non désaluminée au catalyseur classique de FCC.

Les catalyseurs formés de l'association d'un catalyseur classique de FCC et d'une mordénite non désaluminée ont comme principaux inconvénients : la perte rapide de leur activité et la production d'une assez forte quantité de coke supérieure à celle qui se forme normalement sur le catalyseur classique de FCC comprenant une zéolithe Y.

Ces inconvénients sont largements évités par l'emploi des catalyseurs de la présente invention comprenant une mordénite désaluminée et une zéolithe Y.

Dans le but de produire la plus grande quantité possible d'hydrocarbures gazeux à trois et quatre atomes de carbone, et notamment de propylène et d'isobutane, il est parfois avantageux d'augmenter légèrement la température à laquelle on effectue le craquage par exemple d'environ 10°C à environ 50°C. Le catalyseur de la présente invention est cependant dans la majorité des cas suffisamment actif pour qu'une telle augmentation de température ne soit pas nécessaire. Les autres conditions de craquage sont inchangées par rapport à celles employées dans l'art antérieur.

Les exemples suivants illustrent la présente invention sans en limiter la portée.

EXEMPLE 1 (comparaison). Préparation d'une mordénite forme hydrogène de rapport atomique Si/Al égal à environ 10.

La mordénite de départ est référencée TSZ 640NAA et est commercialisée par la société Toyo Soda.

Cette mordénite a comme formule chimique approchée, à l'état déshydraté :

$Na_2O$ ; $Al_2O_3$ ; 20,3 $SiO_2$.

On soumet cette mordénite à quatre traitements successifs dans des solutions aqueuses d'acide chlorhydrique (HCl) 0,3N à 20°C pendant 4 heures sous forte agitation. Le rapport volume de solution sur poids de mordénite sèche (V/P) retenu pour ces traitements est voisin de 20 $cm^3xg^{-1}$. A l'issue du troisième traitement la mordénite est lavée à l'eau distillée, puis séchée à 100°C pendant 10 heures.

A l'issue de ces traitements la mordénite obtenue, référencée HM1 possède les principales caractéristiques physico-chimiques détaillées dans le tableau 1 ci-après.

Les paramètres cristallins (W. MEIER et D.H. OLSON, Atlas of Zeolite Structure Types, 1978) sont donnés en nanomètre (nm). la cristallinité DX est exprimée en pourcentage par rapport au solide initial servant de référence.

La teneur en sodium est exprimé en ppm poids par rapport au poids de mordénite sèche.

La capacité d'absorption d'azote mesurée à 77 K pour une pression relative P/Ps égale à 0,19 est exprimée en $cm^3$ (liquide)$xg^{-1}$.

EXEMPLE 2. (comparatif). (Préparation d'une mordénite forme hydrogène de rapport atomique Si/Al égal à environ 11.

Le solide de départ est une mordénite de synthèse de rapport atomique Si/Al de 5,4 commercialisée par la Société Chimique de la Grande Paroisse sous la référence Alite 150. Cette zéolithe a comme formule chimique, approchée, sous forme déshydratée :

$Na_2O$ ; $Al_2O_3$ ; 10,8 $SiO_2$.

Dans une première étape le solide de départ est soumis à trois échanges successifs à 100°C, dans des solutions de nitrate d'ammonium ($NH_4NO_3$)10 N avec des rapports volume de solution sur poids de mordénite sèche (V/P) égaux à 5 $cm^3xg^{-1}$. Après le troisième échange le solide est lavé à l'eau distillée et séché à 100°C pendant 10 heures. Le solide obtenu à l'issue de cette première série de traitements est référencé $NH_4MO$, sa teneur résiduelle en sodium est inférieure à 500 ppm en poids.

Dans une deuxième étape le solide $NH_4MO$ est calciné sous air humide contenant 85 % volume de vapeur d'eau à 600°C pendant 2 heures ; il subit ensuite une attaque acide dans une solution aqueuse de HCl 0,6N à 100°C pendant 4 heures avec un rapport V/P de 7 $cm^3xg^{-1}$. La mordénite est ensuite lavée à l'eau distillée, puis séchée à 100°C pendant 10 heures. Elle est référencée HM2, ses principales caractéristiques physicochimiques sont données dans le tableau 1 ci-après.

EXEMPLE 3. Préparation d'une mordénite forme hydrogène, de rapport atomique Si/Al égal à environ 29,3.

900 grammes de mordénite sodique, (zéolon 900 Na) en extrudés de 1,587 mm (1/16ème de pouce) commercialisée par la société américaine NORTON, sont soumis à deux échanges ioniques dans une solution de nitrate d'ammonium dans les conditions suivantes :

volume de solution     : 3,6 litres
concentration de la solution en $NO_3NH_4$     : 2 M
durée de l'échange     : 1 heure
température de l'échange     : T = 90°C.

Après chaque échange, le solide est lavé dans 1,8 litre d'eau distillée pendant 20 minutes à 20°C.

A la fin des ces opérations, le produit est séché à 120°C dans une étuve pendant 3 heures. Le solide ainsi obtenu est calciné pendant 2 heures à 550°C sous un débit de 180 litres par heure d'un air humide contenant 50 % en volume de vapeur d'eau.

La mordénite, forme hydrogène ainsi obtenue est plongée dans 9 litres d'une solution 0,6M en acide chlorhydrique et est traitée pendant 2 heures à 90°C dans cette solution. Après un lavage de 10 minutes dans 5,4 litres d'eau distillée, puis filtration, le produit est séché à 120°C pendant 2 heures. La mordénite obtenue est soumise à une calcination sous air humide dans des conditions comparables à celles décrites ci-avant, sauf en ce qui concerne la température qui est portée à 600°C.

Le solide obtenu est plongé dans 3,6 litres d'une solution aqueuse normale en acide chlorhydrique et est traité pendant 2 heures à 90°C dans cette solution. Après un lavage de 10 minutes dans 3,6 litres d'eau distillée à 20°C, le solide est séché à 120°C pendant 2 heures.

Ce solide est ensuite soumis à une calcination sous air humide dans des conditions comparables à celles décrites précédemment, sauf en ce qui concerne la température qui est portée à 650°C.

Le solide calciné est plongé dans 1,8 litre d'une solution aqueuse 2N en acide chlorhydrique et est traité pendant 2 heures à 90°C dans cette solution. Il est ensuite lavé dans 5,4 litres d'eau distillée, filtré et séché à 120°C pendant 2 heures. Les caractéristiques essentielles de la mordénite acide obtenue, référencée HM3, sont données dans le tableau 1 ci-après.

EXEMPLE 4. Préparation d'une mordénite forme hydrogène de rapport atomique Si/Al égal à environ 60.

Le solide de départ est la mordénite forme $NH_4+$ référencée NH4Mo obtenue comme produit intermédiaire dans l'exemple 2. On fait subir à cette zéolithe une calcination, sous air humide contenant 85 % en volume de vapeur d'eau, à 650°C pendant 4 heures, puis un traitement dans une solution d'acide nitrique $(HNO_3)4N$ à 100°C pendant 4 heures, le rapport V/P étant de 5 $cm^3xg^{-1}$. La mordénite est ensuite lavée à l'eau distillée, puis séchée à 100°C pendant 10 heures. Le solide obtenu est référencé HM4 ; ses principales caractéristiques physicochimiques sont répertoriées dans le tableau 1 ci-après.

EXEMPLE 5. Préparation d'une mordénite forme hydrogène de rapport atomique Si/Al supérieur à 100.

Le solide de départ est la mordénite de rapport atomique Si/Al égal à 11 référencée HM2 et préparée dans l'exemple 2. Cette mordénite est soumise aux mêmes traitements que ceux, appliqués au solide NH4Mo, décrits dans l'exemple 4, c'est-à-dire une calcination sous vapeur d'eau à 650°C suivie d'une attaque acide. On obtient ainsi un solide très désaluminé de rapport atomique Si/Al égal à 110 référencé HM5. Les caractéristiques physicochimiques de ce solide sont données dans le tableau 1 ci-après.

EXEMPLE 6. Préparation d'une mordénite forme hydrogène de rapport atomique Si/Al égal à environ 120.

Au lieu de choisir comme mordénite forme sodique initiale la zéolithe Alite 150 de la Société Chimique de la Grande Paroisse, on utilise une mordénite forme sodique dite à large pore de la société Toya Soda référencée TSZ 600 NAE. Cette zéolithe a comme formule chimique approchée, sous forme déshydratée :

$Na_2O$ ; $Al_2O_3$ ; 11,6 $SiO_2$.

On soumet alors cette zéolithe à la même série de traitement que celle qui a permis d'aboutir au solide HM5 à partir de la zéolithe Alite 150 (voir ci-devant exemple 5). On obtient alors une mordénite forme hydrogène très désaluminée, référencée HM6, dont les caractéristiques physicochimiques sont très proches de celle de HM5 et sont données dans le tableau 1 ci-après.

TABLEAU 1

| Mordénite | Si/Al | Paramètres cristallins (nm) | | | DX % | Na ppm | $N_2$ $cm^3xg^{-1}$ | V maille $nm^3$ |
|---|---|---|---|---|---|---|---|---|
| | | $\vec{a}$ | $\vec{b}$ | $\vec{c}$ | | | | |
| HM1 | 10 | 1,812 | 2,031 | 0,749 | 95 | 450 | 0,230 | 2,756 |
| HM2 | 11 | 1,813 | 2,027 | 0,746 | 98 | 200 | 0,242 | 2,742 |
| HM3 | 29,3 | 1,809 | 2,027 | 0,747 | 98 | 100 | 0,250 | 2,739 |
| HM4 | 60 | 1,808 | 2,027 | 0,747 | 99 | 90 | 0,248 | 2,738 |
| HM5 | 110 | 1,807 | 2,027 | 0,746 | 98 | 90 | 0,251 | 2,732 |
| HM6 | 120 | 1,806 | 2,027 | 0,745 | 95 | 90 | 0,249 | 2,727 |

EXEMPLE 7. Préparation des additifs de craquage à base de mordénite.

Les divers produits HM1 à HM6 préparés dans les exemples 1 à 6 sont utilisés pour préparer des additifs de craquage par mélange mécanique de façon classique à raison de 30 % en poids de mordénite sèche et de 70 % en poids de silice amorphe, préalablement calcinée, de granulométrie comparable à celle des mordénites.

Les divers additifs ainsi obtenus sont pastillés, puis rédits en petits agrégats à l'aide d'une machine à concasser. La fraction des grains de taille comprise entre $4.10^{-5}$ m et $2x10^{-4}$ m (40 à 200 microns) est ensuite recueillie par tamisage. Ces additifs sont appelés AM1, AM2, AM3, AM4, AM5 et AM6 et contiennent respectivement les mordénites, HM1, HM2, HM3, HM4, HM5 et HM6 à raison de 30 % en poids.

EXEMPLE 8. Préparations des catalyseurs de craquages comparatifs et conformes à l'invention et conditions de tests catalytiques de ces catalyseurs.

Les divers additifs AM1 à AM6 obtenus dans l'exemple 7 sont mélangés mécaniquement de façon classique à raison de 20 % en poids à un catalyseur industriel neuf de craquage catalytique appelé en abrégé CAT. Le catalyseur CAT contient une matrice de silice-alumine et 30 % en poids d'une zéolithe Y ultrastabilisée (USY) de paramètre cristallin $\vec{a}$ de 2,45 nm, dont l'ouverture des canaux dodécagonaux principaux est de $7,4x10^{-10}$ m (W. MEIER et D. HOLSON, Atlas of Zeolite Structure Types 1978). Le catalyseur (CAT) et les divers additifs ont été préalablement calcinés 6 heures à 750°C en présence de 100 % de vapeur d'eau.

Les catalyseurs résultant du mélange du catalyseur CAT et des additifs AM1 à AM6 contiennent donc : 24 % en poids de zéolithe Y ultrastabilisée (USY), 6 % en poids de mordénite et 70 % en poids de matrice.

Le catalyseur CAT, chacun des catalyseurs résultant du mélange du catalyseur CAT et des additifs AM1 à AM6 et l'additif AM6, est ensuite introduit dans le réacteur d'une microunité de test catalytique MAT. L'aptitude de chaque catalyseur à convertir une charge lourde d'hydrocarbures est ensuite déterminée dans les conditions suivantes :

quantité de catalyseur = 6 g
rapport pondéral catalyseur/charge = C/0 = 6
durée de l'injection de la charge = 40 secondes
WHSV = vitesse spatiale massique = $15\ h^{-1}$
température = 510°C.

7

La charge utilisée a les caractéristiques suivantes :
densité 15°C = 0,929
% poids S = 0,155
% poids N = 0,1
Carbone Conradson % = 3,8
Ni + V = 5 ppm
Viscosité 60°C = 45,2 mm²/s
$I_R$ (60°C) = 1,5061 (indice de réfraction de la charge)
Saturées = 45,5 %m poids
Oléfines = 1,5 % poids
Aromatiques = 42,7 % poids
Résines = 9,8 % poids
Asphaltènes (insoluble au C5) = 3,1 % poids.

- Comparaison des performances catalytiques.
Les résultats sont exprimés de la manière suivante :
- Conversion de la charge en % poids
- rendement en gaz en % poids ($H_2$ + hydrocarbures de $C_1$ à $C_4$)
- répartition des gaz en % poids ($H_2$ + hydrocarbures de $C_1$ à $C_4$)
- rendement en essence en % $C_5$ à 220°C
- rendement en LCO (distillats moyens : 220-380°C) en % poids
- rendement en coke en % poids.
Les résultats obtenus avec les divers catalyseurs et le catalyseur industriel de craquage sont rassemblés dans le tableau 2 ci-après.

TABLEAU 2

| CATALYSEURS | CAT* | CAT + AM1* | CAT + AM2* | CAT + AM3 | CAT + AM4 | CAT + AM5 | CAT + AM6 | AM6* |
|---|---|---|---|---|---|---|---|---|
| Conversion | 67,7 | 64,3 | 64,7 | 65,0 | 67,1 | 68,5 | 68,8 | 53,7 |
| Gaz total | 19,4 | 19,8 | 19,9 | 20,1 | 21,5 | 23,1 | 23,3 | 29,3 |
| Essence | 40,5 | 36,2 | 36,7 | 37,0 | 37,7 | 37,5 | 37,8 | 18,1 |
| LCO | 20,7 | 19,5 | 19,2 | 20,7 | 20,0 | 19,8 | 19,5 | 13,2 |
| Coke | 7,8 | 8,3 | 8,1 | 7,9 | 7,9 | 7,7 | 7,7 | 6,3 |
| $H_2$ | 0,06 | 0,07 | 0,07 | 0,06 | 0,05 | 0,06 | 0,05 | 0,07 |
| $C_1 + C_2$ | 1,7 | 1,8 | 1,8 | 1,7 | 1,8 | 1,7 | 1,6 | 2,2 |
| Propane | 1,4 | 1,5 | 1,6 | 1,7 | 1,9 | 2,0 | 1,9 | 2,5 |
| Propylène | 5,2 | 5,4 | 5,6 | 5,9 | 6,9 | 8,0 | 8,1 | 10,1 |
| butanes totaux** | 5,3 | 5,2 | 5,1 | 5,1 | 5,2 | 5,5 | 5,6 | 7,1 |
| Isobutane | 4,1 | 4,2 | 4,1 | 4,0 | 4,4 | 4,8 | 5,0 | 6,3 |
| Butènes | 5,7 | 5,8 | 5,8 | 5,7 | 5,7 | 5,8 | 5,9 | 7,3 |

* catalyseurs non conformes à l'invention

** n butane plus isobutane.

Ces résultats montrent que l'utilisation des additifs à base de mordénites désaluminées, notamment

8

lorsque le rapport atomique Si/Al est supérieur à une valeur située aux environs de 25 à 30 (additifs AM3 à AM6), permet de produire des quantités plus importantes de propylène et, pour les additifs contenant les mordénites les plus désaluminées (additifs AM4 à AM6), d'isobutane.

Le catalyseur formé de l'additif AM6 seul présente une conversion insuffisante et surtout un rendement en essence très insuffisant pour être utilisable industriellement.

## Revendications

1) Catalyseur renfermant :
   a) de 20 à 95 % en poids d'au moins une matrice,
   b) de 1 à 60 % en poids d'au moins une zéolithe Y, de structure faujasite,
   c) de 0,01 à 30 % en poids d'au moins une mordénite désaluminée ayant un rapport atomique Si/Al supérieur à 15, une teneur en sodium inférieure à environ 0,2 % en poids, un volume de maille V, de la maille élémentaire, inférieur à environ 2,760 $nm^3$ et une capacité d'adsorption d'azote mesurée à 77 K supérieure à 0,09 $cm^3$ (liquide)x$g^{-1}$ sous une pression relative P/Ps de 0,19.

2) Catalyseur selon la revendication 1 renfermant :
   a) de 30 à 85 % en poids de matrice,
   b) de 4 à 50 % en poids de zéolithe Y et,
   c) de 0,05 à 20 % en poids de mordénite désaluminée.

3) Catalyseur selon la revendication 1 ou 2 dans lequel la matrice est choisie dans le groupe formé par l'alumine, la silice, la magnésie, l'argile, l'oxyde de titane, la zircone, les combinaisons de deux au moins de ces composés et les combinaisons alumine-oxyde de bore.

4) Catalyseur selon l'une des revendications 1 à 3 dans lequel la zéolithe Y est une zéolithe Y ultrastable sous forme hydrogène, et/ou sous forme au moins partiellement échangée par des cations des métaux du groupe des terres rares de numéro atomique 57 à 71 inclus.

5) Catalyseur selon l'une des revendications 1 à 4 dans lequel la mordénite a un rapport atomique Si/Al d'environ 25 à environ 1000, une teneur en sodium inférieure à 0,1 % en poids, un volume de maille V, de la maille élémentaire d'environ 2,650 à environ 2,760 $nm^3$ et une capacité d'adsorption d'azote mesurée à 77 K supérieure à 0,11 $cm^3$(liquide)x$g^{-1}$ sous une pression relative P/Ps de 0,19.

6) Catalyseur selon l'une des revendications 1 à 5 dans lequel la mordénite désaluminée est une mordénite désaluminée forme hydrogène.

7) Catalyseur selon l'une des revendications 1 à 5 dans lequel la mordénite désaluminée est une mordénite désaluminée sous forme au moins partiellement échangée par des cations des métaux du groupe des terres rares de numéro atomique 57 à 71 inclus.

8) Procédé de préparation d'un catalyseur défini, selon l'une des revendications 1 à 7, caractérisé en ce qu'il comporte les étapes suivantes :
   a) on prépare un mélange séché par atomisation de mordénite désaluminée et d'une matrice,
   b) on prépare un mélange séché par atomisation de zéolithe Y et d'une matrice et,
   c) on mélange le produit séché de l'étape (a) au produit séché de l'étape (b),

9) Procédé de préparation d'un catalyseur défini selon l'une des revendications 1 à 7, caractérisé en ce que la mordénite désaluminée et la zéolithe Y sont incorporées simultanément à une matrice.

10) Utilisation d'un catalyseur défini selon l'une des revendications 1 à 7, ou d'un catalyseur préparé selon l'une des revendications 8 ou 9, dans un procédé de craquage catalytique d'une charge hydrocarbonée, dans des conditions de craquage, en vue d'obtenir un produit renfermant une proportion élevée de propylène et d'isobutane.

Office européen
des brevets

**RAPPORT DE RECHERCHE EUROPEENNE**

Numero de la demande

EP  88 40 0912

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 445 855  (MOBIL OIL)<br>* Revendications 1-6,14,15 *<br>--- | | B 01 J  29/06<br>C 10 G  11/05 |
| A | FR-A-2 251 615  (W.R. GRACE & CO.)<br>* Revendications *<br>--- | | |
| A | FR-A-2 203 675  (SHELL)<br>* Revendications 1,3,6 *<br>--- | | |
| A | EP-A-0 152 233  (MOBIL OIL)<br>* Pages 3-15 *<br>--- | | |
| A | EP-A-0 206 871  (IFP)<br>--- | | |
| A | US-A-4 477 336  (J. SCHERZER)<br>----- | | |

**DOMAINES TECHNIQUES RECHERCHES (Int. Cl.4)**

B 01 J  29/00
C 10 G  11/00

Le présent rapport a été établi pour toutes les revendications

| Lieu de la recherche | Date d'achèvement de la recherche | Examinateur |
|---|---|---|
| LA HAYE | 27-07-1988 | DEVISME F.R. |